# EUROPEAN PATENT APPLICATION

(11) **EP 2 008 797 A1**
(43) Date of publication of application: **31.12.2008**
(21) Application number: 08159165.3
(22) Date of filing: 27.06.2008
(51) Int. Cl.: B29C 70/44

(54) **Equipment for press moulding composite material items**

(30) Priority: 29.06.2007 IT MI20071308
(71) Applicant: Mako Shark S.r.l., 23843 Dolzago (LC) (IT)
(72) Inventor: Bonomelli, Federico, 23843 Dolzago (LC) (IT)
(74) Representative: Fisauli, Beatrice A. M.

(57) **Abstract**

The present invention concerns an apparatus (1,1a) for the production on a press of pieces made of composite material. Said apparatus, which is of the type that provides a mould (2) designed to lay out pre-impregnates (5) and a countermould (3,13,23) comprising a rigid supporting part (3a,13a,23a) and a flexible part (3b,13b,23b) facing said pre-impregnates (5), said countermould (3,13,23) performing a closing stroke to bring the flexible part (3b,13b,23b) of said countermould (3,13,23) into contact with said pre-impregnates (5) so as to exert on them a suitable pressure to compact them, is characterized in that it provides means (4,14) designed to generate a hydrostatic pressure on at least part of the surface of said pre-impregnates (5) so as to compress said flexible part (3b,13b,23b) of the countermould (3,13,23) against said pre-impregnates (5) in order to generate a suitable pressure to compact said pre-impregnates (5), irrespective of the orientation of said surface with respect to the direction of travel of said countermould (3).

## Description

The present invention relates to an apparatus for the production of moulded parts made of composite material.

An albeit not particularly recent technology for the production of particularly light and resistant pieces makes use of composite materials, i.e., ones made of resin-impregnated fibres.

There exists a considerable variety of composite materials according to the materials that make them up and the technologies used for their production. As a consequence of this, the differences of performance that are found in the various cases are considerable.

The case of greatest interest as example of prior art of the present invention regards the technology of the so-called pre-impregnates, i.e., woven materials or unidirectional materials made up of fibres (normally carbon, kevlar and/or glass) impregnated with resins, or high-performance matrices, whether of a thermosetting type (for example, epoxy, epoxyphenol, cyano-ester, cyano-epoxy resins, etc.) or of a thermoplastic type (for example, PEEK, PES, PAI, etc.).

In the case of materials pre-impregnated with thermosetting resins, these are laid out with the appropriate sequence on a mould, are then made to adhere to one another and to the mould by means of a vacuum bag, or else by means of a press, and are then subjected to a thermal treatment that causes polymerization of the resin. Finally, they are extracted from the mould, which had previously been treated with a detaching agent. In the case of use of the vacuum bag, the thermal treatment is normally carried out in an autoclave, where also a suitable pressure is applied to compact the various layers, whereas, in the case of use of a press, it is normally the mould itself that is heated, whilst the press supplies the pressure necessary for compacting the layers.

In the case of materials pre-impregnated with thermoplastic resins, since the resin is already polymerized, and is thus rigid, these must be heated to bring the resin almost to fusion so as to enable modelling thereof. Forming is then performed in a way that is conceptually similar to the case of thermosetting materials, albeit with important differences, both as regards the apparatuses and the procedure.

The method that provides for the use of the vacuum bag is without doubt the most versatile in so far as it enables production of more complex shapes, even in the presence of undercuts. However, said method is particularly expensive in terms of time and requires highly qualified staff. In effect, the method of the vacuum bag is used to a large extent in aerospace constructions or, in any case, in high-quality productions, in which the cost is considerably less important than the quality.

Another serious limit of the vacuum-bag technology is the low level of productivity.

The technology that provides for the use of a mould and of a countermould actuated by a press for compacting the layers and supplying the heat necessary for polymerization of the resin has been developed to overcome the drawbacks referred to above. In the case where the surface of the piece to be made is sufficiently regular, it is possible to deposit the various layers on the mould without any need for superposition; in this case, the countermould can be completely rigid, and the piece assumes in each point the thickness imposed by the apparatus. Normally, however, the surfaces, especially if they are of considerable dimensions, do not enable superpositions to be avoided. In this case, a rigid countermould would cause problems in the points where the thickness varies on account of said superpositions. In these cases, the countermould is coated with silicone rubber which, since it is deformable, enables greater freedom of use of the pre-impregnates, and hence the piece, the shape of the external surface, imposed by the rigid mould, remaining unvaried, will have thicknesses that vary from area to area according to the superpositions.

In principle, this solution would be able to deal with any situation in so far as the rubber, by undergoing deformation, tends to occupy all the spaces on top of the stratification, so compacting it. If the rubber were sufficiently soft, the pressure could be almost hydrostatic. However, in order to exert the pressure, it is necessary for the rigid part of the countermould not to come to bear upon the mould. It follows that, when the rubber part is loaded by the press, if it were excessively soft, it would be squeezed out of the apparatus, through the space comprised between the mould and the rigid part of the countermould. For this reason, the rubber must have a consistency such as to maintain the shape even under the effect of high pressures and, hence, has a limited capacity to exert an effective pressure on walls the plane of lie of which is markedly inclined with respect to the normal to the direction of advance of the countermould in its closing stroke.

Obviously, this situation is all the more critical the greater the inclination of the surface in question with respect to the surface normal to the direction of advance of the countermould. In the limit case where the surface is parallel to the direction of advance of the countermould, it is obviously altogether impossible to control compacting on said surface. Obviously, nor is it thinkable to provide undercuts, even ones of limited size.

The present invention overcomes the drawbacks described above by proposing an apparatus, in accordance with Claim 1, to be used with a press and designed to exert the proper compacting pressure an the entire surface of the pre-impregnate, irrespective of the orientation of the latter with respect to the direction of advance of the countermould.

The invention consists in an apparatus for the production in a press of pieces made of composite material, of the type that provides for a mould, designed for laying out pre-impregnates, and a countermould comprising a rigid supporting part and a flexible part, facing said pre-impregnates, said countermould performing a closing stroke for bringing the flexible part of said countermould into contact with said pre-impregnates so as to exert on them a suitable pressure to compact them, and is characterized in that it provides for means designed to generate a hydrostatic pressure in an area corresponding to at least part of the surface of said pre-impregnates so as to compress the flexible part of the countermould against said pre-impregnates in order to generate a suitable pressure to compact said pre-impregnates, irrespective of the orientation of said surface with respect to the direction of travel of said countermould.

Said means designed to generate a substantially hydrostatic pressure comprise deformable chambers, situated in appropriate positions between the rigid part and the flexible part of the countermould, which are subjected to pressure using means external to the mould itself.

According to a preferred embodiment of the invention, the rigid part of the countermould can come to bear upon the mould, substantially closing the space between the mould and the rigid part of the countermould itself. In this way, the flexible part of the countermould may even be rather soft, for example, a gel, so as to transmit a substantially hydrostatic pressure on the entire surface of the piece to be made, without the risk of any leakage, in so far as the space between the mould and the countermould is substantially closed.

The advantage deriving from the use of an apparatus in conformance with the invention lies in the fact that pieces of a complex shape, even with undercuts, can be obtained using a press, with all the advantages deriving from the use of the press as compared to the vacuum-bag technology and which consist in a drastic increase in productivity and reduction of costs.

As emerges clearly from the ensuing description, the quality of the end product will be normally better than in the case of moulding on a press, in so far as the pressure exerted on the pre-impregnates is considerably more uniform and is not unlike what occurs in the case of vacuum-bag moulding.

The invention will now be described by way of non-limiting example according to a preferred embodiment and with reference to the attached figures, where:
- Figures 1 and 2 show an apparatus for moulding pieces made of composite material, in conformance with the invention, in two different operating situations;
- Figure 3 shows an apparatus according to the invention in which undercuts are present; and
- Figures 4 and 5 show a variant of the apparatus according to the invention.

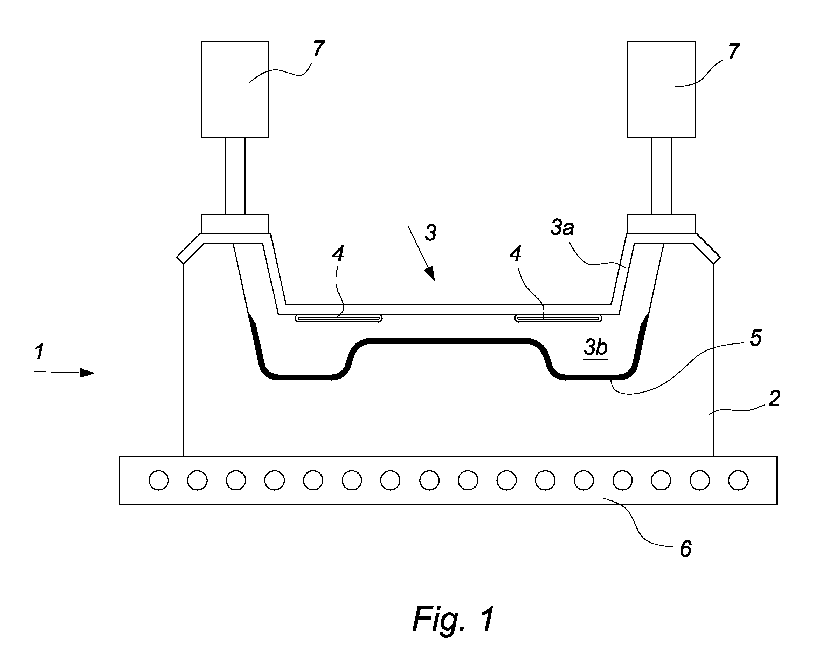

With reference to Figure 1, designated by (1) is an apparatus for the production of pieces made of composite material, which comprises a mould (2) and a countermould (3). The countermould (3) in turn comprises a rigid part (3a) and a flexible part (3b), the latter made, for example, of silicone rubber.

Positioned between the rigid part (3a) and the flexible part (3b) of the countermould (3) are deformable fluid-tight inflatable chambers (4), which, in resting conditions, are substantially squeezed. Finally, housed in the space comprised between the mould (2) and the flexible part (3b) of the countermould (3) are the pre-impregnates (5) that constitute the piece to be made.

In order to perform its function, the apparatus (1) is actuated by a press, which, in the attached figures, is shown schematically by means of a heating surface (6) and hydraulic jacks (7).

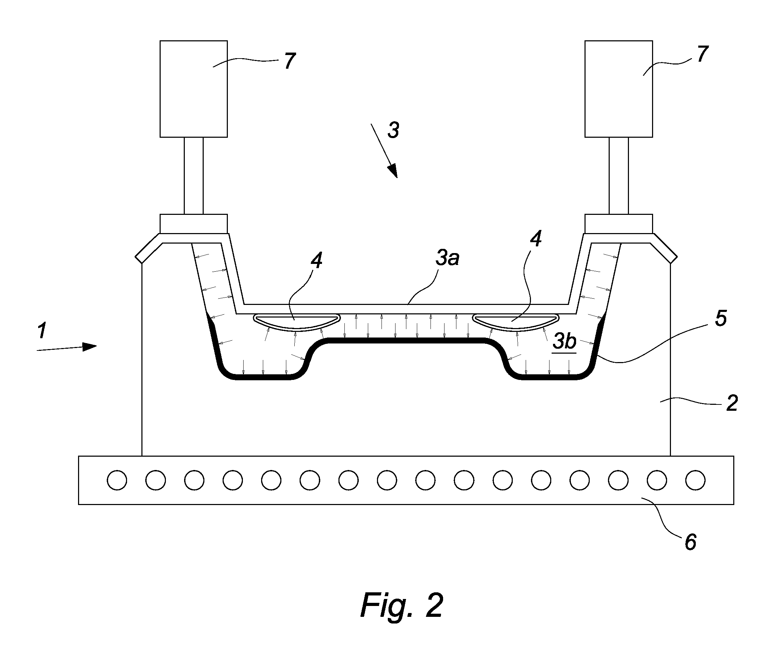

The rigid part (3a) of the countermould (3) comes to bear upon the mould (2). In this way, the space between the mould (2) and the countermould (3) is substantially closed so that the flexible part (3b) of the countermould (3), since there is no risk of leakage of said flexible part (3b), can even be very soft; for example, it may be a gel. In this case, by applying the pressure by inflating the chambers (4), the pressure is distributed in a substantially regular way on the entire surface involved, as is represented by the arrows of Figure 2, where it may be seen how the chambers (4), by being inflated, exert pressure upon the flexible part (3b) of the countermould (3).

Of course, the effective pressure approaches the condition of hydrostaticity the softer the flexible part (3b) of the countermould (3).

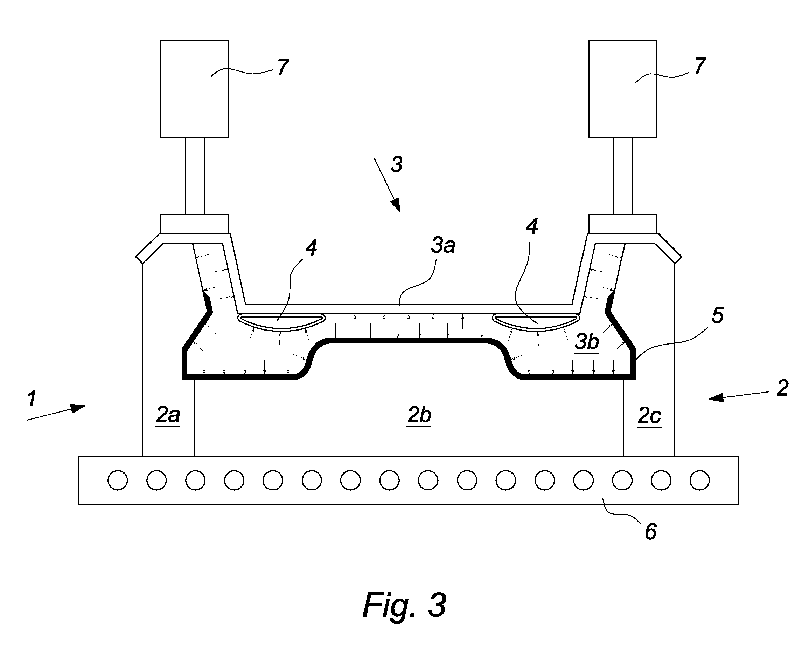

In the case of use of particularly soft flexible parts (3b), it is possible to provide quite easily undercuts, as shown in Figure 3, in which the mould (2) can be broken down into the parts (2a), (2b) and (2c) to enable extraction of the piece (5).

The flexible part (3b) of the countermould (3) can be, for example, a silicone rubber, as is in use currently according to the known art, or else a gel. Obviously, the pressure exerted on the pre-impregnates (5) will approach the situation of hydrostatic pressure using a gel, in so far as it is much more deformable than a silicone rubber. Also the thickness of the flexible part (3b) of the countermould (3) has its importance in the uniform distribution of the pressure. In practice, for a thickness of at least 30 mm, a value of hardness of 20 shore may be indicated, below which the pressure on the pre-impregnates (5) is substantially uniform and enables the undercuts to be obtained.

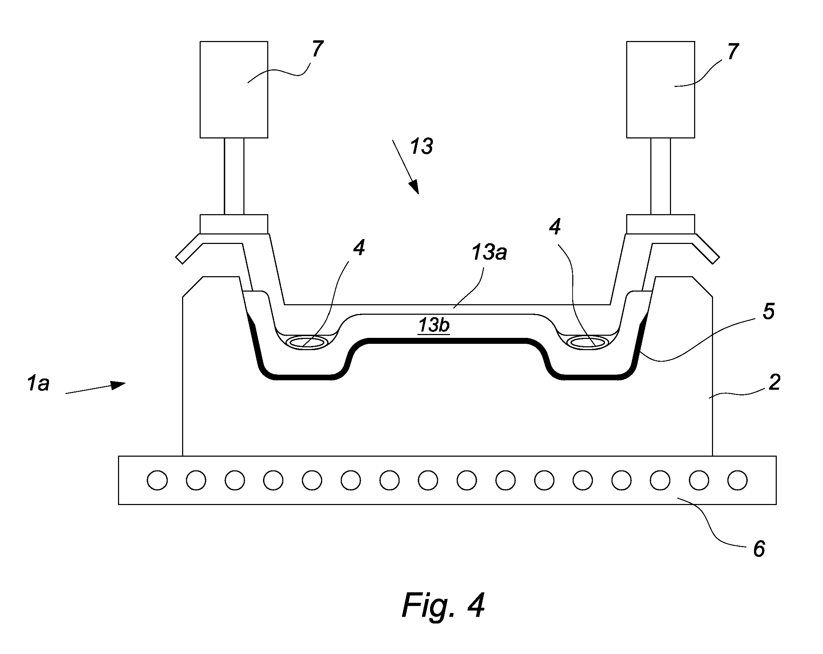

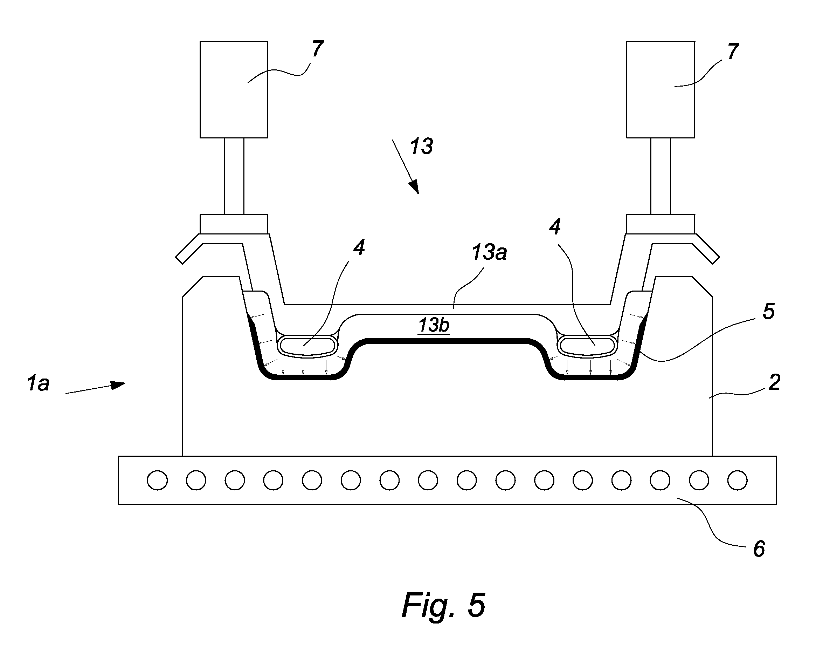

Figures 4 and 5 show a first variant (1a) of the apparatus according to the invention. According to said first variant, the compacting pressure is supplied using a countermould (13) of a known type, which also comprises a rigid part (13a) and a flexible part (13b). A countermould of this sort, to be able to act, cannot come to bear with its rigid part (13a) upon the mould (2). In addition, the flexible part (13b) must present a sufficient consistency to prevent it being squeezed out of the apparatus since no barriers are present to prevent it.

In this case, the pressure on possible excessively inclined surfaces can be obtained by inserting fluid-tight deformable chambers (4) between the rigid part (13a) and the flexible part (13b) of the countermould (13), in a position suitable for exerting a localized pressure on the surfaces involved.

In Figure 5 it may be seen how the expansion of the chambers (4) causes a thrust on the surfaces set in front of them, irrespective of the inclination of the surfaces themselves.

With the apparatus (1a) according to said first variant, it is not possible to obtain normally a hydrostatic pressure, but it is possible in any case to compact the pre-impregnates (5) effectively.

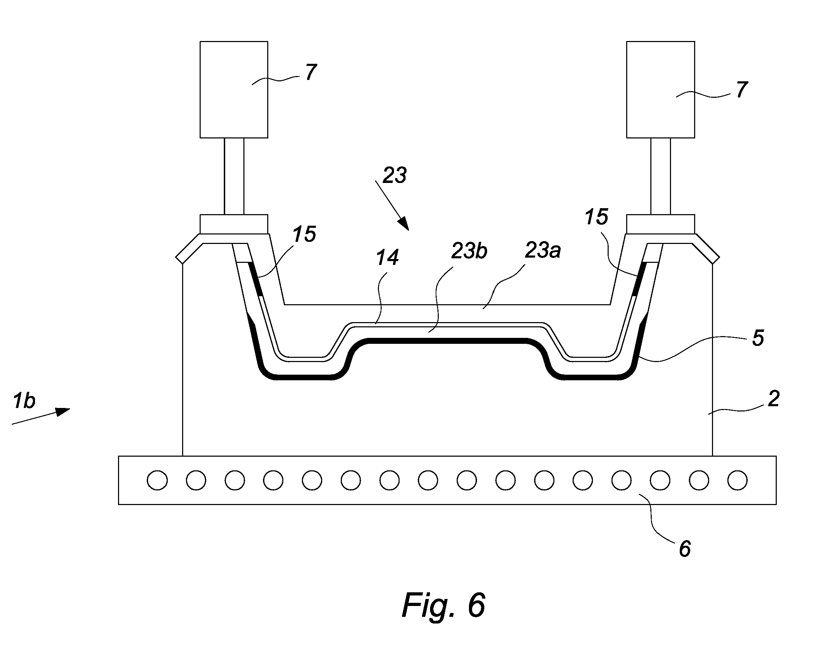

Figure 6 shows a second variant of the apparatus (1 b) according to the invention. Also in this case a countermould of a known type (23) is used comprising a rigid part (23a) and a flexible part (23b). In said second variant, however, the flexible part (23b) is connected to the rigid part (23a) of the countermould (23) only along the perimeter, for example, by gluing (15), so as to provide a deformable chamber (14) that will extend substantially throughout the surface of the pre-impregnates (5). In this case, it is preferable for the countermould (23) to bear upon the mould (2) just skimming the pre-impregnates (5) with its flexible part (23b). Once the countermould (23) has been blocked via the hydraulic jacks (7), the chamber (14) is pressurized, and the pre-impregnates (5) are compacted.

As an alternative to gluing of the perimeter of the flexible part (23b) on the rigid part (23a) of the countermould (23), the chamber (14) can be obtained by of insertion of a separated bladder (not represented). In this second case, fluid tightness of the chamber (14) is more reliable.

In the case of said second variant, the pressure applied on the pre-impregnates (5) is rigorously hydrostatic.

From the foregoing description, it emerges clearly how, using an apparatus according to the invention, it is possible to obtain on a press pieces made of composite material that up to now could be produced only with the vacuum-bag technique, with consequent considerable increase in productivity and reduction in costs.

The invention has been described by way of non-limiting example according to a preferred embodiment thereof. Persons skilled in the sector may devise numerous other embodiments all falling within the sphere of protection of the ensuing claims.

## Claims

1. An apparatus (1, 1a) for production on a press of pieces made of composite material, of the type that provides for a mould (2) designed for laying out pre-impregnates (5) and a countermould (3, 13, 23) comprising a rigid supporting part (3a, 13a, 23a) and a flexible part (3b, 13b, 23b), facing said pre-impregnates (5), said countermould (3, 13, 23) performing a closing stroke to bring the flexible part (3b, 13b, 23b) of said countermould (3, 13, 23) into contact with said pre-impregnates (5) so as to exert thereon a pressure suitable for compacting them, said apparatus being **characterized in that** it provides for means (4, 14) designed to generate a hydrostatic pressure on at least part of the surface of said pre-impregnates (5) so as to compress said flexible part (3b, 13b, 23b) of the countermould (3, 13, 23) against said pre-impregnates (5) in order to generate a suitable pressure to compact said pre-impregnates (5), irrespective of the orientation of said surface with respect to the direction of travel of said countermould (3).

2. The apparatus for the production of pieces made of composite material according to Claim 1, **characterized in that** said means designed to generate a hydrostatic pressure on at least part of the surface of said pre-impregnates comprise one or more fluid-tight deformable chambers (4) situated between the rigid part (3a, 13a) and the flexible part (3b, 13b) of said countermould (3, 13), there being provided means designed to pressurize said fluid-tight deformable chambers (4).

3. The apparatus for the production of pieces made of composite material according to Claim 1, **characterized in that** said means designed to generate a hydrostatic pressure on the surface of said pre-impregnates comprise a fluid-tight deformable chamber (14), which extends substantially over the entire surface of the pre-impregnates (5), situated between the rigid part (23a) and the flexible part (23b) of said countermould (23), there being provided means designed to pressurize said fluid-tight deformable chamber (14).

4. The apparatus for the production of pieces made of composite material according to Claim 3, **characterized in that** said fluid-tight deformable chamber (14) is obtained by means of fluid-tight connection along the perimeter of the flexible part (23b) to the rigid part (23a) of the countermould (23).

5. The apparatus for the production of pieces made of composite material according to Claim 3, **characterized in that** said fluid-tight deformable chamber (14) comprises a separated bladder.

6. The apparatus for the production of pieces made of composite material according to Claim 1, **characterized in that** said flexible part (3b) of the countermould (3) has a deformability sufficiently high as to distribute in a substantially uniform way over the pre-impregnates (5) the thrust generated by said one or more fluid-tight deformable chambers (4), there being provided means designed to contain said flexible part (3b) of the countermould (3) in such a way as to prevent leakage thereof from the apparatus (1).

7. The apparatus for the production of pieces made of composite material according to Claim 6, **characterized in that** said means designed to contain said flexible part (3b) of the countermould (3), in such a way as to prevent any leakage thereof from the apparatus (1), comprise said rigid part (3a) of the countermould (3) that comes to bear upon said mould (2) so as to substantially close the possible exit paths between said mould (2) and said rigid part (3a) of the countermould (3).

8. The apparatus for the production of pieces made of composite material according to Claim 6, **characterized in that** said flexible part (3b) of the countermould (3) has a hardness substantially equal to or less than 20 shore, and a thickness substantially equal to or greater than 30 mm.

9. The apparatus for the production of pieces made of composite material according to Claim 6, **characterized in that** said flexible part (3b) of the countermould (3) is made of silicone rubber.

10. The apparatus for the production of pieces made of composite material according to Claim 6, **characterized in that** said flexible part (3b) of the countermould (3) is made of gel.
